# EUROPÄISCHE PATENTANMELDUNG

(11) **EP 4 000 815 A1**
(43) Veröffentlichungstag der Anmeldung: **25.05.2022**
(21) Anmeldenummer: 21192864.3
(22) Anmeldetag: 24.08.2021
(51) Int. Cl.: B25J 9/16

(54) **VISUALISIEREN EINES SCHUTZFELDES**

(30) Priorität: 12.11.2020 DE 102020129823
(71) Anmelder: SICK AG, 79183 Waldkirch (DE)
(72) Erfinder: Hofmann, Dr. Christoph, 79108 Freiburg (DE); Pokrandt, Peter, 76474 Au am Rhein (DE); Reichert, Silja, 79194 Gundelfingen (DE)

(57) **Zusammenfassung**

Es wird eine Visualisierungsvorrichtung (10) für mindestens ein Schutzfeld (26) mindestens eines sicheren Sensors (22) angegeben, der eine Maschine (18), insbesondere einen Roboter oder Roboterarm, durch Überwachung des Schutzfeldes (26) absichert, wobei die Visualisierungsvorrichtung (10) eine Anzeige (12) und eine Steuer- und Auswertungseinheit (14) aufweist, die dafür ausgebildet ist, eine graphische Repräsentation des Schutzfeldes (26) zu erzeugen und die graphische Repräsentation auf der Anzeige (12) darzustellen. Dabei ist der Sensor (22) an einem beweglichen Maschinenteil der Maschine (18) mitbewegt angebracht, und die Steuer- und Auswertungseinheit (14) ist weiterhin dafür ausgebildet, eine Pose des Sensors (22) bezüglich der Visualisierungsvorrichtung (10) zu bestimmen und die graphische Repräsentation des Schutzfeldes (26) an die Pose anzupassen.

## Beschreibung

Die Erfindung betrifft eine Visualisierungsvorrichtung und ein Verfahren zum Visualisieren eines Schutzfeldes nach dem Oberbegriff von Anspruch 1 beziehungsweise 15.

Das primäre Ziel der Sicherheitstechnik ist, Personen vor Gefahrenquellen zu schützen, wie sie beispielsweise Maschinen im industriellen Umfeld darstellen. Die Maschine wird mit Hilfe von Sensoren überwacht, und wenn demnach eine Situation vorliegt, in der eine Person gefährlich nahe an die Maschine zu gelangen droht, wird eine geeignete Absicherungsmaßnahme ergriffen. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder Überwachung der Verschmutzung optischer Bauteile.

In der sicherheitstechnischen Überwachung von Robotern, speziell Leichtbaurobotern, besteht ein zunehmender Wunsch nach engerer Zusammenarbeit mit Personen (MRK, Mensch-Roboter-Kollaboration) auch in komplexen Umgebungen. Relevante Normen in diesem Zusammenhang sind beispielsweise die ISO 10218 für Industrieroboter oder die ISO 15066 für kollaborierende Roboter. Ähnliche Problemstellungen ergeben sich für andere Maschinen als Roboter, beispielsweise AGVs/AGCs (Automated Guided Vehicle/Container) oder Drohnen.

Hier besteht nun die Möglichkeit, einen kleinen, leichten Distanzsensor beziehungsweise eine Mehrfachanordnung solcher Distanzsensoren mit dem Werkzeug am Roboterarm mitzubewegen. Mit einem entsprechenden Distanzsensor nach dem Prinzip der Lichtlaufzeitmessung befasst sich die DE 10 2015 112 656 A1. Damit wird eine Art virtuelle Schutzglocke um das Werkzeug überwacht und der Roboter bei Eindringen eines sicherheitsrelevanten Objekts gebremst oder angehalten. Die DE 10 2019 110 882 A1 erweitert dies um eine Anpassung von Abstandsschwellen und damit der Ausdehnung der virtuellen Schutzglocke während einer Annäherungsbewegung an eine Arbeitsoberfläche oder ein Werkstück. In der noch unveröffentlichten europäischen Patentanmeldung mit dem Aktenzeichen EP19176696.3 wird auch die Ausrichtung der schützenden Strahlen mindestens eines Distanzsensors und damit die Form, insbesondere Öffnungswinkel und/oder Durchmesser der Schutzglocke verändert.

In der EP 3 533 568 A1 wird ein Robotersystem vorgestellt, bei dem ein erster beispielsweise kapazitiver Sensor sehr nahe oder berührende Objekte erkennt. Ein zweiter Sensor, der ein optischer Sensor nach einem Lichtlaufzeitprinzip sein kann, erfasst Objekte in einem größeren Überwachungsbereich. Es können Roboterbewegungen eingelernt werden, der jeweilige Überwachungsbereich der Sensoren jedoch bleibt unverändert.

Ein Distanzsensor nach dem Lichtlaufzeitverfahren und ganz allgemein optoelektronische Sicherheitssensoren arbeiten in der Regel mit nahinfraroten Lichtquellen, die für das menschliche Auge bewusst nicht sichtbar sind. Dies führt jedoch dazu, dass die Arbeitsweise und speziell der Erfassungsbereich der Sensoren schwer nachvollzogen werden kann. Ähnliches gilt bei anderen berührungslos wirkenden Sensoren. In vielen Phasen einer sicherheitstechnischen Anwendung besonders mit eng optimierten Abläufen in Kooperation mit Personen fehlen dann wichtige Informationen oder sind nur auf umständlichen Wegen zu erhalten. Diese Schwierigkeiten nehmen erheblich zu, wenn sich der Sensor mit einer Maschine oder einem Roboter mitbewegt und die Situation noch unübersichtlicher wird.

Die noch unveröffentlichte europäische Patentanmeldung mit dem Aktenzeichen EP20198357.4 ermöglicht eine Visualisierung von Sensordaten in einer industriellen Umgebung vorzugsweise durch Überblenden eines Kamerabildes mit Zusatzinformationen (Augmented Reality). Dabei orientiert sich die Kamera an speziellen Markern, zu denen in einem anfänglichen Konfigurationsverfahren die Pose von Sensoren eingelernt wird. Mit einer Bewegung der Sensoren kann das System aber nicht umgehen.

Die EP 1 521 211 A2 befasst sich mit dem Bestimmen einer Pose einer Bildempfangseinrichtung, um damit im Rahmen von Augmented Reality zur Unterstützung der Roboterprogrammierung oder zur Anleitung von Arbeitskräften bei Montage- und Wartungsvorgängen virtuelle Objekte, wie eine Roboterbahn, eine andere Umgebung oder virtuelle Werkstücke einzublenden. Bei diesen virtuellen Objekten ist aber nicht an Sensoren und schon gar nicht deren unsichtbare Wirkprinzipien oder Erfassungsbereiche gedacht.

In der DE 10 2010 017 857 A1 wird eine 3D-Kamera vorgestellt, die eine Maschine aus der Vogelperspektive beobachtet und absichert. Auf einer Anzeigeeinrichtung können einer Person sowohl in einer Konfigurationsphase als auch im Betrieb Schutzfelder dargestellt werden. Die 3D-Kamera bewegt sich aber nicht.

Die EP 2 048 557 B1 stellt eine Konfiguration für eine 3D-Kamera vor, bei dem ein Handgerät durch seine eigene Position Grenzpunkte von Schutzfeldern festlegt. Die Konfigurationsfortschritte können auf dem Handgerät insbesondere in Überblendung eines realen Bildes visualisiert werden. Auch hier bewegt sich die 3D-Kamera nicht.

Aus der DE 10 2012 111 345 A1 ist ein mobiles Handgerät zur Ausrichtung eines Sensors bekannt. Darauf wird ein Überlagerungsbild des Sichtbereichs des Sensors und einer Zielanzeige einer Position eines von dem Sensor erzeugten Lichtflecks dargestellt. Eine Bewegung des Sensors ist nicht vorgesehen, lediglich das Handgerät kann in eine andere Perspektive gebracht werden. Schutzfelder oder auch nur allgemein eine Absicherung einer Maschine sind nicht erwähnt.

Die EP 2 378 445 B1 offenbart ein System zur sicherheitstechnischen Planung, Konfigurierung und Analyse einer industriellen Anlage, die als 3D-Computermodell hinterlegt ist und deren Arbeitsbewegungen simuliert werden können. Die Simulation umfasst ferner ein Sensormodell eines Sicherheitssensors einschließlich grafisch darstellbarer Schutzfelder. Das bleibt jedoch alles rein virtuell, und selbst noch innerhalb des Modells ist eine Bewegung des Sensors nicht vorgesehen, der vielmehr als fix montiert angenommen wird.

Es ist daher Aufgabe der Erfindung, eine verbesserte Absicherung einer Maschine zu ermöglichen.

Diese Aufgabe wird durch eine Visualisierungsvorrichtung und ein Verfahren zum Visualisieren eines Schutzfeldes nach Anspruch 1 beziehungsweise 15 gelöst. Die Visualisierungsvorrichtung ist vorzugsweise ein mobiles Endgerät wie ein Tablet, ein Smartphone oder eine VR-Brille. Ein Sensor überwacht das Schutzfeld, um eine Maschine abzusichern. Die Maschine ist insbesondere ein Roboter oder Roboterarm mit einem Werkzeug, das vornehmlich abzusichern ist (EOAS, End-of-Arm-Safeguarding). Dieses Anwendungsbeispiel eines Roboters wird im Folgenden vielfach stellvertretend verwendet, die Erläuterungen sind jeweils analog auch auf ein anderes bewegliches Maschinenteil zu übertragen.

Ein Schutzfeld ist ein durch eine 2D- oder 3D-Geomtrie definierter Teilbereich des Erfassungsbereichs des Sensors, wobei diese Geometrie durch Anordnung und Bauart des Sensors bedingt und/oder konfiguriert sein kann. Der Sensor hat vorzugsweise ein Wirkprinzip, das mit bloßem Auge nicht nachvollzogen werden kann, so dass ohne die Visualisierung die Geometrie des Schutzfeldes allenfalls ganz indirekt erkennbar wäre. Der Sensor ist vorzugsweise sicher, sei es in sich oder im Zusammenspiel seiner Anwendung. Sicher bedeutet in diesem Zusammenhang, dass der Sensor beziehungsweise die damit verwirklichte Anwendung eine Sicherheitsnorm für Maschinensicherheit, für berührungslos wirkende Schutzeinrichtungen oder eine vergleichbare Sicherheitsnorm erfüllt, die den Betrieb im Personenschutz beziehungsweise der Unfallvermeidung zulässt. Dazu sind dort genau definierte Maßnahmen wie Redundanzen oder Selbsttests erforderlich, mit der die Funktionsfähigkeit gewährleistet und ein etwaiger Fehler aufgedeckt wird. Der Sensor löst eine sicherheitsgerichtete Reaktion aus, mit der die Maschine in einen sicheren Zustand überführt wird, wenn er einen unzulässigen Schutzfeldeingriff erkennt.

Eine Steuer- und Auswertungseinheit der Visualisierungsvorrichtung bestimmt eine graphische Repräsentation des Schutzfeldes mit Geometrieobjekten wie Polygonen, Kreisen oder räumlichen Entsprechungen, die das Schutzfeld als Flächen oder Körper veranschaulichen. Die graphische Repräsentation wird auf einer Anzeige dargestellt. Die Steuer- und Auswertungseinheit kann mindestens ein interner Baustein wie ein Prozessor, aber auch mindestens teilweise extern über ein Netzwerk oder eine Cloud angeschlossen sein oder Ressourcen der Maschine nutzen.

Die Erfindung geht von dem Grundgedanken aus, dass der Sensor an einem beweglichen Maschinenteil der Maschine mitbewegt wird und das Schutzfeld auch in der Bewegung korrekt visualisiert wird. Deshalb berechnet die Steuer- und Auswertungseinheit eine Pose des mitbewegten Sensors bezüglich der Visualisierungsvorrichtung. Pose bedeutet wie üblich die Position und Orientierung in jeweils bis zu drei Freiheitsgraden. Die Pose des Sensors ist durch die Bewegung des Maschinenteils dynamisch. Die graphische Repräsentation des Schutzfeldes wird an die Pose angepasst. Mit anderen Worten werden die Visualisierungen des Schutzfeldes bezüglich des beweglichen Maschinenteils und des daran montierten Sensors an die richtige Position und in die richtige Drehlage gebracht, sie werden mit der Bewegung mitgeführt und/oder vollziehen Drehungen nach.

Die Erfindung hat den Vorteil, dass auf eine intuitive Weise Aufschluss über Abmessungen, Orientierung und Anzahl der ansonsten regelmäßig unsichtbaren Schutzfelder gegeben wird. Durch die Anpassung an die Mitbewegung ist das auch in komplexen Umgebungen möglich, in denen die Situation ohne eine Visualisierung besonders schwer zu überblicken wäre. Damit sind Optimierungen und Überprüfungen der Abläufe ganz wesentlich erleichtert und beschleunigt. Am Sensor selbst muss dafür gar nichts geändert werden, und es wird eine Diagnose auch in Echtzeit ermöglicht, ohne in den laufenden Prozess einzugreifen. Diese Vorteile betreffenden nahezu den gesamten Lebenszyklus, wie das Projektieren einer Anwendung, das Einrichten des Sensors, das Validieren einer Sicherheitsanwendung, den Normalbetrieb und die Wartung.

Die Visualisierungsvorrichtung weist bevorzugt eine Kamera auf, wobei die Steuer- und Auswertungseinheit dafür ausgebildet ist, ein Kamerabild der Kamera und die graphische Repräsentation des Schutzfeldes gemeinsam darzustellen. Damit wird das Schutzfeld als virtuelles Objekt in der Szene behandelt und dargestellt. Auf der Anzeige wird das Schutzfeld einem Livebild überblendet (Augmented Reality). Die Visualisierungsvorrichtung kann auch alternativ zu einer rein virtuellen Darstellung in der Lage sein, die auf einem Modell der Maschine beispielsweise in Form eines CAD-Modells und einem programmierten Bewegungsablauf basiert.

Die Maschine ist bevorzugt ein Roboter mit mehreren Gelenken und insbesondere einem Endeffektor als das bewegliche Maschinenteil. Bei einem solchen Roboter oder Roboterarm hängt die Pose des Endeffektors, also gleichsam dessen Hand, kumuliert von den einzelnen Gelenkstellungen ab. Der Endeffektor oder die Werkzeugspitze ist häufig die eigentliche durch das Schutzfeld abzusichernde Gefahrenquelle.

Die Visualisierungsvorrichtung weist bevorzugt eine Schnittstelle zu der Maschine zur Kommunikation von Daten über die Bewegung des beweglichen Maschinenteils auf. Informationen über die Bewegung können in Form von Messdaten weiterer Sensoren der Maschine übergeben werden, insbesondere von Drehgebern oder dergleichen, die eine Stellung von Gelenken gemessen. Dies ist in beliebigen Verarbeitungszuständen der Messdaten möglich, die eine Maschinensteuerung schon vorgenommen hat. Informationen über die Bewegung schließen vorzugsweise eine Information über die aktuelle Pose des beweglichen Maschinenteils ein.

Die Steuer- und Auswertungseinheit ist bevorzugt dafür ausgebildet, von der Maschine empfangene Daten auf der Anzeige darzustellen. Neben der Visualisierung von Schutzfeldern gibt es eine Vielfalt weiterer Informationen über Maschine und Sensor, die für Planung, Optimierung und Überwachung einer Anwendung von großem Nutzen sind. Die Maschine kann beispielsweise ein CAD-Modell der Maschine, geplante Arbeitsschritte, einen Namen oder Typ der Maschine, eine Kommunikationsadresse und ganz allgemein jegliche Informationen einer Benutzerschnittstelle der Maschine in vielfältiger Aufbereitung übertragen, die dann auf der Visualisierungsvorrichtung angezeigt werden.

Die Steuer- und Auswertungseinheit ist bevorzugt dafür ausgebildet, eine erste Transformation für die Pose des beweglichen Maschinenteils gegenüber einer Maschinenbasis zu bestimmen, insbesondere für die Pose eines Endeffektors eines Roboters gegenüber einer Roboterbasis aus Daten über Gelenkstellungen des Roboters. Die erste Transformation berücksichtigt die Dynamik durch die Bewegung des Maschinenteils, rechnet also bezüglich der Maschine stationären Koordinaten in ein mit dem Maschinenteil und damit dem daran befestigten Sensor mitbewegtes Koordinatensystem um. Im Bereich der Robotik spricht man von der Vorwärtskinematik, der sich auf andere Maschinen übertragen lässt. Durch die kumulierte Wirkung mehrerer Gelenke ergibt sich eine recht komplexe Bewegung des Endeffektors, die aber als Verkettung der einzelnen Gelenkbewegungen anhand von Informationen etwa von an den Gelenken angebrachten Drehgebern mit vergleichsweise elementaren Transformationen ausgedrückt werden kann. Es ist denkbar, die Vorwärtskinematik nicht in der Visualisierungsvorrichtung zu bestimmen, sondern auf entsprechende Berechnungen der Robotersteuerung zuzugreifen.

Die Steuer- und Auswertungseinheit ist bevorzugt dafür ausgebildet, eine zweite Transformation zwischen einem Koordinatensystem der Visualisierungsvorrichtung und einem Koordinatensystem der Maschine zu bestimmen. Mit der zweiten Transformation wird zwischen der Perspektive der Visualisierungsvorrichtung und einem stationären Bezug der Maschine umgerechnet, also beispielsweise einer Maschinenbasis oder Roboterbasis ohne Berücksichtigung der Bewegung des Maschinenteils. Durch Verkettung der ersten und der zweiten Transformation ist dann die Pose des Sensors bezüglich der Visualisierungsvorrichtung bekannt.

Die zweite Transformation ist bevorzugt aus Teiltransformationen über mindestens ein Referenzkoordinatensystem bestimmt, das in einer Umgebung der Maschine festgemacht ist, insbesondere an einem Marker. Die zweite Transformation wird hier in mindestens zwei Zwischentransformationen zerlegt. Das Referenzkoordinatensystem ist beispielsweise an einem Marker oder einem sonstigen Raumpunkt wie einem Ursprung einer Roboterzelle festgemacht. Es ist denkbar, mehrere Zwischentransformationen zu verketten und sich damit sozusagen von Referenzpunkt zu Referenzpunkt bis zu der Maschine zu hangeln. In der zweiten Transformation ist nur die Perspektive der Visualisierungsvorrichtung dynamisch, die Zwischentransformationen zwischen den Referenzkoordinatensystemen und zu einem stationären Maschinenkoordinatensystem sind statisch und können vorab parametriert oder berechnet werden.

Der mindestens eine Sensor ist bevorzugt als optoelektronischer Sensor insbesondere mit einem Lichtsender zur Erzeugung von Sensorlicht in einem nicht sichtbaren Spektrum ausgebildet. Optoelektronische Sensoren eignen sich besonders zur Überwachung von Schutzfeldern. Arbeiten sie mit Licht außerhalb des sichtbaren Spektrums, meist Infrarotlicht, so sind die Erfassungsbereiche und Schutzfelder mit bloßem Auge nicht erkennbar, und deshalb ist die erfindungsgemäße Visualisierung besonders hilfreich.

Der mindestens eine Sensor ist bevorzugt als berührungsloser Distanzsensor zum Messen von Abstandswerten ausgebildet, wobei die Geometrie des Schutzfeldes durch Vergleich der gemessenen Abstandswerte mit mindestens einer Abstandsschwelle festgelegt ist. Der Distanzsensor ist vorzugsweise für eine Messung von Abständen mit einem Lichtlaufzeitverfahren ausgebildet ist. Solche Distanzsensoren können kostengünstig, leicht und kompakt gebaut werden und sind in der Lage, sicherheitsrelevante Eingriffe verlässlich zu erkennen. Es werden mehrere Abstände aus der jeweiligen Position am Maschinenteil zur Umgebung gemessen, sei es durch mehrere Distanzsensoren und/oder einen Distanzsensor mit mehreren Messstrecken. Die Abstände werden mit mindestens einer Abstandsschwelle verglichen, und ein Eingriff in kürzerem Abstand als die Abstandsschwelle wird als Schutzfeldeingriff aufgefasst. Die jeweiligen Messstrecken für die mehreren Abstandswerte bilden gemeinsam eine Art virtuelle Schutzmantel oder Schutzglocke als Schutzfeld, die allerdings nicht zu allen Seiten geschlossen sein muss und deren unterer Rand durch die Abstandsschwelle festgelegt ist. Es ist denkbar, Abstandsschwellen je nach Orientierung der jeweiligen Messstrecke unterschiedlich zu setzen, so dass der ferne Rand der Schutzglocke eine Kontur erhält, und/oder eine Anpassung mit der Bewegung des Maschinenteils vorzunehmen, so dass die Schutzglocke sich dynamisch verändert.

Die Steuer- und Auswertungseinheit ist bevorzugt dafür ausgebildet, eine Abstandsschwelle darzustellen. Das ist besonders dann interessant, wenn es unterschiedliche oder dynamisch angepasste Abstandsschwellen gibt beziehungsweise wenn die Abstandsschwellen gestaffelt werden. Letzteres dient dazu, einen Eingriff in die Messstrecken je nach Abstand zum Sensor unterschiedlich zu werten und beispielsweise mit einer vergleichsweise fernen Abstandsschwelle nur eine Warnung zu erzeugen, dann bei näherem Eingriff die Bewegung des Maschinenteils zu verlangsamen und bei einem nahen Eingriff sofort zu stoppen. Diese unterschiedlichen Abstandsschwellen können ebenfalls visualisiert werden.

Die Steuer- und Auswertungseinheit ist bevorzugt dafür ausgebildet, den mindestens einen Sensor darzustellen. Das geschieht beispielsweise anhand eines CAD-Modells, um einen physisch gar nicht vorhandenen Sensor zu visualisieren oder auch unterschiedliche Sensormodelle auszuprobieren, ohne sie tatsächlich zu montieren. Weiterhin kann ein Sensor auch in einer Solllage visualisiert werden, um dies mit der Realität zu vergleichen.

Die Steuer- und Auswertungseinheit ist bevorzugt dafür ausgebildet, Parameter, Betriebszustände, Messdaten und/oder Fehlermeldungen des Sensors darzustellen. Oben wurde schon erwähnt, dass es möglich ist, außer den Schutzfeldern weitere Informationen über Maschine und Sensor darzustellen. Für den Sensor können beispielsweise Parameter wie Temperatur, aktive Sensorbereiche, Einstellungen, Betriebsmodi, auftretende Fehler und Messdaten einschließlich einer von dem Sensor wahrgenommenen Kontur angezeigt werden. Die Visualisierungsvorrichtung kann als vollständige Bedienschnittstelle des Sensors fungieren.

Die Steuer- und Auswertungseinheit ist bevorzugt dafür ausgebildet, eine vergangene und/oder künftige Bewegungsbahn des beweglichen Maschinenteils darzustellen. Die bisherige Bewegungsbahn ist durch früher ermittelte Posen bekannt und kann beispielsweise fortlaufend mit einer bestimmten Länge oder Dauer angezeigt werden. Die zukünftige Bewegungsbahn kann die Maschinensteuerung liefern, oder es wird ein Prädiktor verwendet, beispielsweise auf Kalman-Filtern basierend.

Die Steuer- und Auswertungseinheit ist bevorzugt dafür ausgebildet, eine voraussichtliche Bewegungsbahn im Falle eines Schutzfeldeingriffs darzustellen. Das ist eine für die Planung und Diagnose einer sicherheitstechnischen Anwendung entscheidende Information, denn die Maschine muss den sicheren Zustand auch im schlechtesten Fall rechtzeitig ohne Unfall erreichen. Dies lässt sich anhand der Visualisierung einer Ausweichbahn oder eines Bremswegs besonders intuitiv überprüfen.

Die Steuer- und Auswertungseinheit ist dafür ausgebildet, einen Prüfpunkt, einen Umschaltpunkt, einen Arbeitspunkt und/oder eine Gefahrenstelle darzustellen, wobei an einem Umschaltpunkt ein Arbeitsvorgang beginnt oder endet, an einem Arbeitspunkt das bewegliche Maschinenteil mit einem Werkstück in Berührung kommt, an einem Prüfpunkt eine Funktionsprüfung des Sensors erfolgt und eine Gefahrenstelle ein Ort oder Bereich ist, an dem Verletzungen drohen. In dieser Ausführungsform werden wichtige Punkte der Arbeitsbewegung der Maschine visualisiert. Solche Punkte sind meist rein virtuell und wären anders nicht zu erkennen. Als drei Beispiele derartiger Punkte sind ein Umschaltpunkt, ein Arbeitspunkt und ein Prüfpunkt zu nennen. An einem Umschaltpunkt setzt die eigentliche Arbeitsbewegung hin zu einem Arbeitspunkt ein oder endet dort. In dieser Phase müssen Schutzfelder regelmäßig angepasst werden, damit die Arbeitsbewegung nicht fehlerhaft die Sicherheitsfunktion auslöst. Der Arbeitspunkt bezeichnet den Ort, wo die eigentliche Bearbeitung erfolgt und beispielsweise ein Werkzeug des beweglichen Maschinenteils ein Werkstück greift, bearbeitet oder bewegt. Der Prüfpunkt kann angefahren werden, vorzugsweise zyklisch, um dort eine Referenz zu vermessen und damit festzustellen, ob die Funktion des Sensors einschließlich der Schutzfeldüberwachung noch gewährleistet ist. Das ist beispielsweise eine Referenzkontur, die zuvor bei einwandfreier Funktion eingelernte wurde. Eine Gefahrenstelle ein Ort oder Bereich, wo Verletzungen und insbesondere Quetschungen drohen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben. Es handelt sich um ein computerimplementiertes Verfahren, dass beispielsweise in einem digitalen Baustein wie einem Prozessor oder dergleichen automatisch abläuft.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Übersichtsdarstellung einer Visualisierungsvorrichtung für einen Sensor an einer abzusichernden Maschine am Beispiel eines Roboterarms;
- Fig. 2: eine Blockdarstellung einer Absicherung mit mindestens einem Sensor;
- Fig. 3: eine Darstellung verschiedener Koordinatensysteme mit jeweiligen Transformationen für die Visualisierung; und
- Fig. 4-6: eine beispielhafte Visualisierung von Schutzfeldern für einen Roboter in verschiedenen Posen oder Bewegungszuständen.

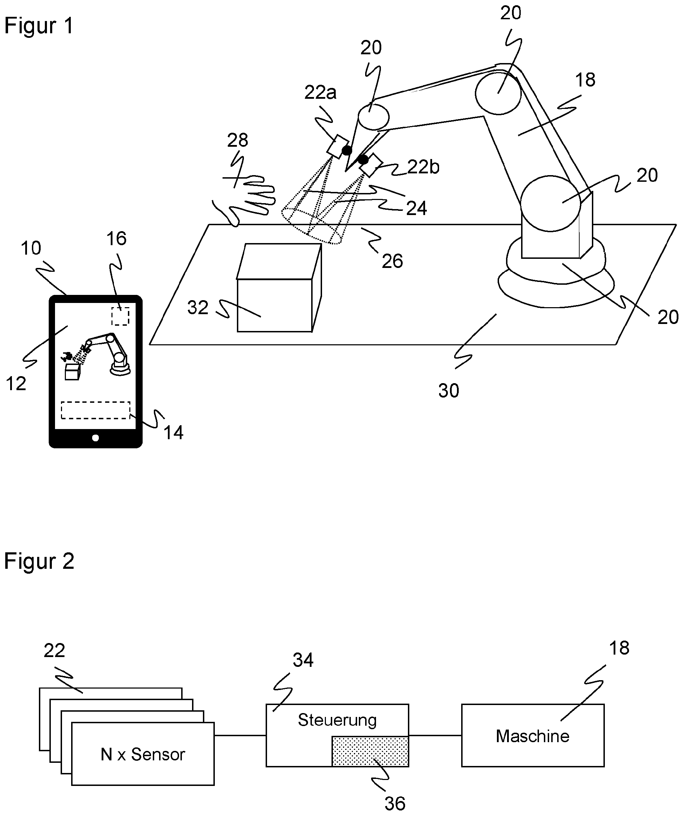

Figur 1 zeigt eine Übersichtsdarstellung einer Visualisierungsvorrichtung 10 und einer damit beobachteten Szenerie. Die Visualisierungsvorrichtung 10 ist beispielsweise ein Smartphone, ein Tablet, eine AR-Brille (Augmented Reality) oder ein ähnliches Gerät mit einer Anzeige 12. Auch eine Weboberfläche und damit ein Fernzugriff ist denkbar. Je nach Ausführung der Visualisierungsvorrichtung 10 und der Anzeige 12 ist eine Darstellung von 2D-Bilddaten oder 3D-Bilddaten möglich. Die Visualisierungsvorrichtung 10 umfasst ferner eine Steuer- und Auswertungseinheit 14 in Form mindestens eines Prozessors oder eines ähnlichen digitalen Bausteins sowie eine optionale Kamera 16. Beides ist gestrichelt eingezeichnet, da es sich im Geräteinneren beziehungsweise auf der Rückseite befindet.

In der beobachteten Szenerie befindet sich ein abzusichernder Roboterarm 18 mit mehreren Gelenken 20, der mit einer Bedienperson zusammenarbeitet. Der Roboterarm 18 ist ein Beispiel, die nachfolgenden Erläuterungen sind auf andere abzusichernde bewegte Maschinen und Szenarien übertragbar, insbesondere AGVs/AGCs (Automated Guided Vehicle / Cart) oder Drohnen.

Zur Absicherung hier speziell des Endeffektors an dessen Spitze sind an dem Roboterarm 18 Distanzsensoren 22a-b angebracht, vorzugsweise in der Umgebung eines Werkzeugs zu dessen Absicherung (EOAS, End-of-Arm-Safeguarding). Die Distanzsensoren 22a-b bestimmen Abstandswerte längs mehrerer Sichtstrahlen 24. Die gezeigte Anzahl von zwei Distanzsensoren 22a-b ist rein beispielhaft, es können mehr Distanzsensoren oder nur ein Distanzsensor sein, der dann allerdings längs mehrerer Sichtstrahlen 24 messen kann. Allgemein gehen von jedem Distanzsensor 22a-b eine oder mehrere Sichtstrahlen 24 aus. Sichtstrahlen 24 können annähernd geometrische Strahlen sein oder einen endlichen Querschnitt aufweisen, wenn beispielsweise der Distanzsensor 22a-b als Flächentaster mit aufgefächertem Lichtstrahl arbeitet. Als Distanzsensoren 22a-b eignen sich besonders optoelektronische Abstandssensoren beispielsweise mit Messung der Lichtlaufzeit (ToF, Time of Flight). Die einleitend genannte DE 10 2015 112 656 A1 stellt ein derartiges System vor, auf das ergänzend verwiesen wird. Es gibt aber auch andere optoelektronische Sensoren, um Abstände zu bestimmen oder Schutzfelder zu überwachen, wie Laserscanner und 2D- oder 3D-Kameras, ebenso wie ganz andere Technologien, etwa Ultraschallsensoren, kapazitive Sensoren, Radarsensoren und dergleichen. Der Sensor ist vorzugsweise sicher im einleitend definierten Sinne, wobei die Sicherheit in der Anwendung alternativ auch durch Vergleich der Messergebnisse mehrerer nicht-sicherer Sensoren oder sonstige Tests erreicht werden kann.

Während des Betriebs werden die von den Distanzsensoren 22a-b gemessenen Abstandswerte mit Abstandsschwellen verglichen. Je nach Position des Roboterarms 18 auf dessen Bewegungsbahn können dafür feste, vorgegebene Abstandsschwellen oder angepasste Abstandsschwellen verwendet werden. Die Abstandsschwellen definieren einen von dem jeweiligen Distanzsensor 22a-b ausgehenden Abschnitt der Sichtstrahlen 24, der als schützender Strahl bezeichnet werden kann. Die schützenden Strahlen gemeinsam bilden ein Schutzfeld 26 als eine Art virtuellen Schutzmantel oder virtuelle Schutzglocke um den Endeffektor. Der Begriff Schutzfeld wird vereinfachend im Singular verwendet, es können auch mehrere Schutzfelder sein. Ohnehin könnte die Gesamtheit aller einzelnen Schutzfelder wieder als ein einziges, gemeinsames Schutzfeld bezeichnet werden.

Greift eine Person beispielsweise mit ihrer Hand 28 in den mittels des Schutzfeldes 26 abgesicherten Bereich ein und unterbricht damit einen der Sichtstrahlen 24 in einem kürzeren Abstand als die zugehörige Abstandsschwelle, so wird das Schutzfeld 26 als verletzt angesehen. Deshalb wird eine sicherheitsgerichtete Reaktion des Roboterarms 18 ausgelöst, die abhängig von den verletzten Abstandsschwellen in einem Verlangsamen, Ausweichen oder einem Nothalt bestehen kann.

Die Abstandsschwellen sind während einer Bewegung des Roboterarms 18 im Freiraum vorzugsweise auf einen vorgegebenen festen Wert gesetzt. Das Schutzfeld 26 hat damit eine feste Ausdehnung. Nähert sich der Endeffektor aber einer Arbeitsfläche 30 oder einem Objekt 32 an, so würde quasi das Schutzfeld 26 anstoßen und fehlerhaft die Sicherheitsfunktion auslösen. Deshalb werden die Abstandsschwellen vorzugsweise in solchen Phasen der Annährung sukzessive reduziert und bei der anschließenden Rückwärtsbewegung wieder verlängert. Durch veränderte Ausrichtung der Sichtstrahlen 24 kann neben der Länge des Schutzfeldes 26 auch dessen Form verändert werden, insbesondere Durchmesser oder Öffnungswinkel einer Schutzglocke variiert werden. Dazu können beispielsweise Lichtquellen oder Sendeoptiken bewegt oder unterschiedliche Lichtquellen aktiviert werden.

Das in Figur 1 aus den Sichtstrahlen 24 zusammengesetzte Schutzfeld 26 ist in der realen Szenerie nicht erkennbar, wenn die Distanzsensoren 22a-b mit Licht außerhalb des sichtbaren Spektrums arbeiten beziehungsweise Sensoren mit einem anderen unsichtbaren Wirkprinzip eingesetzt sind. Selbst noch mit Licht im visuellen Spektrum wäre vielleicht ein Auftreffpunkt des Lichts erkennbar, nicht aber das Schutzfeld 26 als solches, da ja das Licht nicht bei der Abstandsschwelle anhält und überdies während der Propagation durch Luft allenfalls aufgrund von Staub sichtbar würde.

Deshalb wird das Schutzfeld 26 auf der Visualisierungsvorrichtung 10 dargestellt, vorzugsweise in Überblendung mit einem Bild der Kamera 16. Die Visualisierungsvorrichtung 10 kann dafür ein Modell, insbesondere ein Simulationsmodell oder ein CAD-Modell, des Schutzfeldes 26 und/oder des Distanzsensors 22a-b kennen. Das Schutzfeld 26 ließe sich alternativ auch aus der Position des Distanzsensors 22a-b anhand der Sichtstrahlen 24 erzeugen.

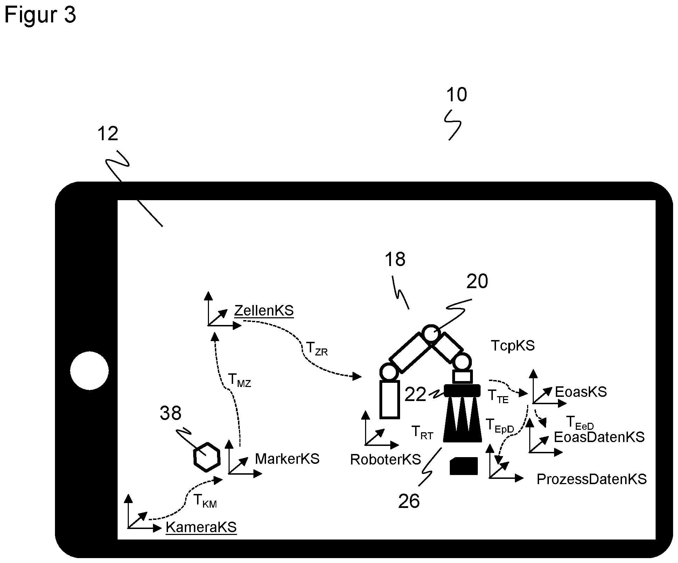

Um das Schutzfeld 26 in der richtigen Pose, d.h. der richtigen Position und Orientierung darzustellen, muss die Steuer- und Auswertungseinheit 14 die Pose des Distanzsensors 22a-b bezüglich der Visualisierungsvorrichtung 10 oder anders ausgedrückt eine Koordinatentransformation zwischen Koordinaten der Visualisierungsvorrichtung 10 und Koordinaten des mit dem Roboterarm 18 mitbewegten Distanzsensors 22a-b bestimmen, und zwar vorzugsweise in Echtzeit. Dies wird später unter Bezugnahme auf die Figur 3 näher erläutert. Unter Berücksichtigung dieser Pose wird eine graphische Repräsentation des Schutzfeldes 26 erzeugt, die beispielsweise aus passenden graphischen Geometrieobjekten wie Polygonen, Kreisen und dergleichen zusammengesetzt ist. Für den dreidimensionalen Fall sind Dreiecksnetze und sonstige an sich bekannte Darstellungsmöglichkeiten denkbar. Diese grafische Repräsentation stellt die Steuer- und Auswertungseinheit 14 dann auf der Anzeige 12 dar.

Die Visualisierung kann als App in der Steuer- und Auswertungseinheit 14 implementiert sein. Es ist denkbar, zumindest einen Teil der Berechnungen extern vorzunehmen und vorverarbeitete oder fertige Ergebnisse zurück zu übertragen, beispielsweise über ein Netzwerk, einen Edge-Controller oder eine Cloud.

Die Visualisierungsvorrichtung 10 kann diverse drahtgebundene und vorzugsweise drahtlose Schnittstellen aufweisen. Eine Schnittstelle zu einer Robotersteuerung des Roboterarms 18 kann einerseits Informationen über die Stellung oder Bewegung des Roboterarms 18 an die Steuer- und Auswertungseinheit 14 übertragen. Andererseits wäre darüber eine Verbindung zu einer Bedienschnittstelle des Roboterarms 18 denkbar, um Prozessmeldungen, Fehlermeldungen und sonstige Parameter für eine ergänzende Visualisierung auszulesen oder sogar zu konfigurieren. Auch eine Schnittstelle zu dem Distanzsensor 22a-b ist denkbar, um von dort Daten zur ergänzenden Visualisierung zu erfahren oder möglicherweise die Visualisierungsvorrichtung 10 zur Konfiguration des Distanzsensors 22a-b zu nutzen. Weitere mögliche Schnittstellen verbinden mit einem Validierungstool oder einem Risikobeurteilungstool, um darin die Dokumentation zu unterstützen.

Figur 2 zeigt ergänzend eine Blockdarstellung der Absicherung. Die Sensoren 22 ebenso wie die Maschine 18 sind hier etwas abstrakter und nicht als Distanzsensor und Roboterarm bezeichnet, um zu unterstreichen, dass Figur 1 nur eine vorteilhafte Ausführungsform zeigt. Die Messwerte eines oder mehrerer Sensoren 22 werden an eine Steuerung 34 weitergegeben, innerhalb derer ein Funktionsblock 36 für die weiteren Sicherheitsauswertungen zuständig ist und die erforderlichenfalls ein sicheres Signal an die Maschine 18 beziehungsweise deren Steuerung ausgibt, um eine Sicherheitsreaktion auszulösen. Die Sicherheitsauswertungen alternativ wenigstens teilweise in mindestens einem der Sensoren 22 untergebracht sein. Der Funktionsblock 36 kann als solcher, aber auch als Softwarepaket, App oder in jeder sonst geeigneten Form implementiert sein.

Der Funktionsblock 36 dient der eigentlichen Absicherung und sollte nicht mit der Funktionalität oder App für die Visualisierung in der Visualisierungsvorrichtung 10 verwechselt werden. Die Steuerung 34 ist vorzugsweise eine Sicherheitssteuerung, alternativ kommt aber auch eine andere Hardware in Betracht, wie ein Mikrocontroller, ein Computer, ein PLC (programmable logic controller), die Roboter- oder Maschinensteuerung, eine Edge-Computing-Infrastruktur oder eine Cloud. Auch hinsichtlich der Kommunikationsverbindungen besteht eine große Auswahl, etwa I/O-Link, Bluetooth, WLAN, Wi-Fi, 3G/4G/5G und prinzipiell jeglicher industrietaugliche Standard. Die schon erwähnten Schnittstellen der Visualisierungsvorrichtung 10 können mit der Steuerung 34 bestehen, die entsprechend weitervermittelt.

Die Sensoren 22 und die Steuerung 34, zumindest soweit es den sicherheitsrelevanten Funktionsblock 36 betrifft, müssen eine sichere Erfassung und Auswertung im Sinne der einschlägigen Normen leisten. Ein Weg dafür ist, dass sichere Sensoren und eine Sicherheitssteuerung eingesetzt werden. Es ist aber auch denkbar, originär nicht sichere Hardware zu verwenden und das geforderte Sicherheitsniveau durch Redundanz, auch diversitäre Redundanz, beziehungsweise Plausibilitätschecks oder zyklische Tests zu erreichen.

Figur 3 illustriert die Bestimmung der Pose des Sensors 22 und damit des Schutzfeldes 26 bezüglich der Visualisierungsvorrichtung 10. Das lässt sich letztlich als Koordinatentransformation eines Kamerakoordinatensystems KameraKS in ein Sensorkoordinatensystem EoasKS ausdrücken und wird hier in eine Vielzahl miteinander zu verkettender einzelner Transformationen zerlegt. Ein Teil dieser Transformationen ist statisch, ein anderer dynamisch.

Die einzelnen Schritte in diesem Beispiel sind: von der Kamera oder Visualisierungsvorrichtung 10 mit dem Kamerakoordinatensystem KameraKS zu einem Marker 38 mit einer Transformation T_{KM} in ein Markerkoordinatensystem MarkerKS, von dem Marker 38 zu einem Zellenursprung einer Roboterzelle mit einer Transformation T_{MZ} in ein Zellenkoordinatensystem ZellenKS, von dem Zellenursprung zu einer Roboterbasis mit einer Transformation T_{ZR} in ein Roboterkoordinatensystem RoboterKS, von der Roboterbasis zu einem Endeffektor mit einer Transformation T_{RT} in ein Endeffektorkoordinatensystem TcsKS und von dort mit einer Transformation T_{TE} in das Sensorkoordinatensystem EoasKS. Schließlich können weitere Transformationen T_{EeD} zu Sensordaten oder T_{EpD} zu Prozessdaten führen.

Damit kann die gesamte Transformation für die Visualisierung berechnet werden, indem die einzelnen Transformationen nacheinander ausgeführt beziehungsweise miteinander verkettet werden: T_{Visualisierung} = T_{KM} ∘ T_{MZ} ∘ T_{ZR} ∘ T_{RT} ∘ T_{TE} ∘ T_{EeD}. Der letzte Transformationsschritt kann durch T_{EpD} ersetzt werden oder entfallen. Mit den jeweiligen letzten Transformationen erfolgt noch eine Anpassung, je nachdem, welche Daten in welcher Pose zu dem Sensor 22 visualisiert werden sollen.

Die Transformationen T_{MZ} und T_{ZR} zwischen Marker 38, Zellenursprung und Roboterbasis sind statisch und können vorab berechnet werden. Hier kann auch der Zwischenschritt zum Zellenursprung entfallen oder sich die Visualisierungsvorrichtung 10 direkt am Roboter Koordinatensystem ausrichten. Umgekehrt können weitere Zwischentransformationen über zusätzliche Marker oder sonstige Referenzpunkte eingefügt werden.

Sofern nicht die Visualisierungsvorrichtung 10 fest montiert ist, muss die Transformation T_{KM} dynamisch berechnet werden, da sie von der Pose der Visualisierungsvorrichtung 10 abhängt. Die Ausrichtung der Visualisierungsvorrichtung 10 anhand des Markers 38 ist jedoch nicht Gegenstand der Erfindung, hierzu wird ergänzend auf die einleitend genannte noch unveröffentlichte europäische Patentanmeldung mit dem Aktenzeichen EP20198357.4 verwiesen. Es gibt auch andere Möglichkeiten, Kamerakoordinaten in Weltkoordinaten umzurechnen, etwa auf Basis natürlicher Landmarken, wie Fenster, Türrahmen, Säulen, fest installierte Maschinen oder dergleichen, mit funkgestützten Verfahren, wie UWB, Bluetooth, NFC, RFID oder dergleichen, oder durch Bewegungsverfolgung der Visualisierungsvorrichtung 10 beispielsweise mit einem eigenen Inertialsensor (IMU, inertial measurement unit).

Interessant für die Erfindung ist dagegen die dynamische Transformation T_{RT} von dem stationären Roboterkoordinatensystem in das mitbewegte Endeffektorkoordinatensystem. Hiermit wird die Bewegung des Endeffektors nachvollzogen, vorzugsweise durch fortlaufende Berechnung in Echtzeit, damit die Visualisierungen zu der Bewegung beziehungsweise der jeweiligen aktuellen Pose des Roboterarms 18 passt. Ein Beispiel für diese Transformation T_{RT} ist die Vorwärtskinematik. Das bezeichnet in der Robotik die Berechnung der Pose des Endeffektor beispielsweise aus den aktuell eingestellten Gelenkwinkeln der Gelenke 20 sowie möglichen weiteren Kinematikparametern des Roboterarms 18, insbesondere um neben der Pose auch noch weitere Informationen wie die Geschwindigkeit und Bewegungsrichtung abzuleiten. Die Vorwärtskinematik kann in der Steuer- und Auswertungseinheit 14 anhand der von dem Roboterarm 18 übertragenen Parameter, alternativ bereits in der Robotersteuerung berechnet werden.

Die dann noch folgenden Transformationen T_{TE}, T_{EeD} und T_{EpD} beziehen sich auf die feste Montage des Sensors 22 beziehungsweise eine gewünschte Visualisierung bezüglich des Sensors 22 und sind wiederum statisch.

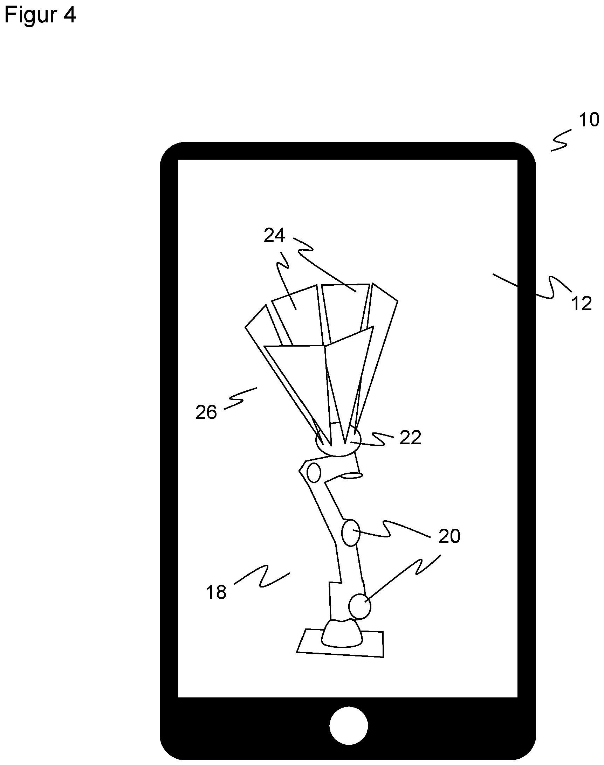

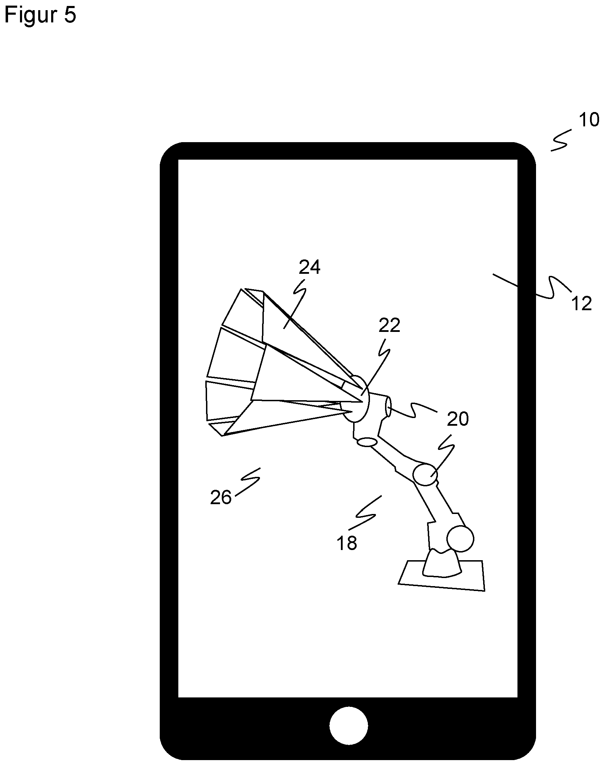

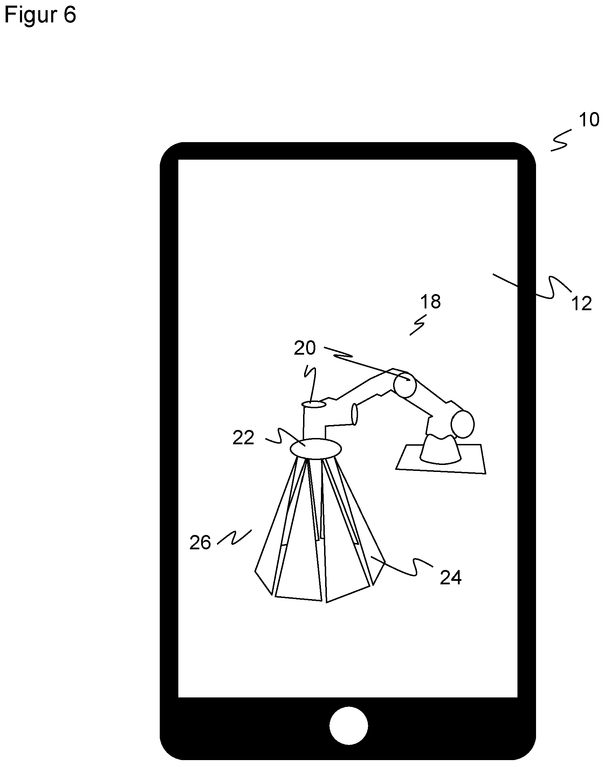

Die Figuren 4 bis 6 zeigen eine beispielhafte Visualisierung in verschiedenen Posen des Roboterarms 18. Das Schutzfeld 26 setzt sich aus mehreren hier flächigen, dreieckigen Sichtstrahlen 24 zusammen und ist virtuell als graphische Repräsentation in ein Livebild eingeblendet. Die Schutzfelder 26 werden jeweils an der richtigen Stelle am Endeffektor und in passender Orientierung visualisiert. Besonders hilfreich ist diese Form der Darstellung in einer komplexen industriellen Szenerie mit weiteren Objekten, Sensoren und/oder Maschinen.

Zusätzlich zu Schutzfeldern 26 oder an deren Stelle können noch eine Vielzahl weiterer Informationen visualisiert werden. Das sind zum einen Sensordaten, und hier wiederum Parameter, Betriebsmodi und dergleichen, die gegebenenfalls auch eingestellt werden, sowie Messdaten oder Fehlermeldungen. Einige nicht abschließend genannte Beispiele sind Distanzwerte, die Anzahl aktiver Lichtempfangselemente (SPAD, Single-Photon Avalanche Diode), die Signalstärke einzelner Lichtempfangselemente, Temperaturen an verschiedenen Messorten im Sensor, eine Betriebszeit, eine Datenrate, eine Identifikation und dergleichen mehr. Auch Roboterdaten können visualisiert werden, wenn entsprechende Schnittstellen zwischen der Visualisierungsvorrichtung 10 und dem Roboterarm 18 geschaffen werden, die vorzugsweise zur Übertragung der Vorwärtskinematik oder dafür zugrundeliegender Ausgangswerte ohnehin vorgesehen sind. Insbesondere kann auf die Bewegungsplanung oder die Bedienschnittstelle des Roboterarms 18 zugegriffen werden. Aus der Vorwärtskinematik, alternativ einer Historie der bisherigen Posen und gegebenenfalls einer Prädiktion kann die Bewegungsbahn gezeigt werden. Dabei kann vorzugsweise entschieden werden, wie lange in die Vergangenheit die Bahn visualisiert wird, ähnlich einem virtuellen Ariadnefaden. Es sind damit auch Geschwindigkeiten und Orientierungen des Roboterarms 18 zugängig, die auf Wunsch des Users ebenfalls visualisiert werden könnten.

In einer typischen Anwendung mit dem Roboterarm 18 gibt es wichtige anwendungsspezifische Raumpunkte, die ebenfalls visualisiert werden können. Zu nennen sind hier beispielhaft ein Umschaltpunkt (switch point), ein Arbeitspunkt (process point) und ein Prüfpunkt (check point). Am Umschaltpunkt endet und beginnt eine freie Fahrt des Endeffektors mit Übergang in eine eigentliche Arbeitsphase. In dieser Arbeitsphase wird der Arbeitspunkt erreicht, an dem der Endeffektor ein Werkstück berührt, beispielsweise um es zu bearbeiten, zugreifen oder zu bewegen. Am Prüfpunkt wird die Funktionsfähigkeit des Sensors 22 getestet. Für weitere Details dieser besonderen Raumpunkte wird auf die DE 10 2019 110 882 A1 verwiesen. Aus der Bewegungsplanung kann weiterhin eine Abfolge der nächsten künftig angefahrenen dieser Raumpunkte auf der Anzeige 12 dargestellt werden.

Die Visualisierung ist in praktisch allen Phasen von Vorteil. Bei der Projektierung und Simulation einer Anwendung können CAD-Modelle samt ihres Wirkprinzips beziehungsweise der erzeugten oder überwachbaren Schutzfelder 26 in einer realen industriellen Szenerie angeordnet werden. Dabei kann eine Variantenauswahl eines Sensors getroffen und die die bauliche Eignung und die Kompatibilität geprüft werden.

Bei der Inbetriebnahme und Validierung einer Anwendung lässt sich prüfen, ob Endeffektor und Werkstück von dem Schutzfeld 26 vollständig umschlossen sind, ob der Sensor stets einen Referenzhintergrund innerhalb seiner nominellen Reichweite registrieren kann und ob eine gute Signalrate des Sensors zu erwarten ist, was wegen Oberflächen mit Glanz oder starker beziehungsweise schwacher Remission möglicherweise nicht der Fall ist. Die Roboterbahn kann optimiert werden, insbesondere um Kantentreffer der Sichtstrahlen 24 zu vermeiden. Gerade bei hochflexiblen Anlagen, die umgebaut, angepasst oder erweitert werden, sind leistungsfähige und leicht zugängliche Analyse- und Bewertungsmethoden für den Sicherheitsnachweis erforderlich, und dazu trägt die erfindungsgemäße Visualisierung erheblich bei, die einen niederschwelligen Zugang bietet. In Anlehnung an Augmented Reality könnte das als Augmented Validation bezeichnet werden.

Während des eigentlichen Betriebs der Anwendung kann eine verbesserte Handhabung und Kooperation erreicht werden. Dazu sind diverse zumeist schon angesprochene Visualisierungen möglich, angefangen bei den Schutzfeldern 26 über allgemeine Mess- und Sensordaten, Abstandsschwellen, anwendungsspezifische Raumpunkte, Robotergeschwindigkeit, Roboter Bahnen, Roboterstoppweg, Darstellung einer Gefahrenstelle insbesondere in Form einer Warnung vor Quetschgefahr am Arbeitspunkt und Fehlermeldungen, insbesondere welcher Sensor 22 konkret davon betroffen ist. Letzteres erleichtert vor allem die Wartung und Diagnose einer Anwendung.

Grundsätzlich könnte eine Anwendung zunächst komplett mittels Simulation geplant werden. Dazu erfolgt die Darstellung auf der Visualisierungsvorrichtung 10 in Virtueller Realität (VR). Im Anschluss daran wird die reale Anwendung und Szenerie wie erläutert in Überblendung mit Schutzfeldern 26 und sonstigen virtuellen Informationen gezeigt (AR, Augmented Reality). Dies ermöglicht einen sehr intuitiven Soll-ist-Vergleich durch den Übergang VR-AR, mit dem sich auch Manipulationen in einer Anwendung aufdecken lassen.

## Patentansprüche

1. Visualisierungsvorrichtung (10) für mindestens ein Schutzfeld (26) mindestens eines Sensors (22), der eine Maschine (18), insbesondere einen Roboter oder Roboterarm, durch Überwachung des Schutzfeldes (26) absichert, wobei die Visualisierungsvorrichtung (10) eine Anzeige (12) und eine Steuer- und Auswertungseinheit (14) aufweist, die dafür ausgebildet ist, eine graphische Repräsentation des Schutzfeldes (26) zu erzeugen und die graphische Repräsentation auf der Anzeige (12) darzustellen,
**dadurch gekennzeichnet,**
**dass** der Sensor (22) an einem beweglichen Maschinenteil der Maschine (18) mitbewegt angebracht ist und dass die Steuer- und Auswertungseinheit (14) weiterhin dafür ausgebildet ist, eine Pose des Sensors (22) bezüglich der Visualisierungsvorrichtung (10) zu bestimmen und die graphische Repräsentation des Schutzfeldes (26) an die Pose anzupassen.

2. Visualisierungsvorrichtung (10) nach Anspruch 1,
die eine Kamera (16) aufweist, und wobei die Steuer- und Auswertungseinheit (14) dafür ausgebildet ist, ein Kamerabild der Kamera (16) und die graphische Repräsentation des Schutzfeldes (26) gemeinsam darzustellen.

3. Visualisierungsvorrichtung (10) nach Anspruch 1 oder 2,
wobei die Maschine (18) ein Roboter mit mehreren Gelenken (20) und insbesondere einem Endeffektor als das bewegliche Maschinenteil ist.

4. Visualisierungsvorrichtung (10) nach einem der vorhergehenden Ansprüche, die eine Schnittstelle zu der Maschine (18) zur Kommunikation von Daten über die Bewegung des beweglichen Maschinenteils aufweist.

5. Visualisierungsvorrichtung (10) nach einem der vorhergehenden Ansprüche, wobei die Steuer- und Auswertungseinheit (14) dafür ausgebildet ist, von der Maschine (18) empfangene Daten auf der Anzeige (12) darzustellen.

6. Visualisierungsvorrichtung (10) nach einem der vorhergehenden Ansprüche, wobei die Steuer- und Auswertungseinheit (14) dafür ausgebildet ist, eine erste Transformation für die Pose des beweglichen Maschinenteils gegenüber einer Maschinenbasis zu bestimmen, insbesondere für die Pose eines Endeffektors eines Roboters gegenüber einer Roboterbasis aus Daten über Gelenkstellungen (20) des Roboters.

7. Visualisierungsvorrichtung (10) nach einem der vorhergehenden Ansprüche, wobei die Steuer- und Auswertungseinheit (14) dafür ausgebildet ist, eine zweite Transformation zwischen einem Koordinatensystem der Visualisierungsvorrichtung (10) und einem Koordinatensystem der Maschine (18) zu bestimmen.

8. Visualisierungsvorrichtung (10) nach Anspruch 7,
wobei die zweite Transformation aus Teiltransformationen über mindestens ein Referenzkoordinatensystem bestimmt ist, das in einer Umgebung der Maschine (18) festgemacht ist, insbesondere an einem Marker (38).

9. Visualisierungsvorrichtung (10) nach einem der vorhergehenden Ansprüche, wobei der mindestens eine Sensor (22) als optoelektronischer Sensor insbesondere mit einem Lichtsender zur Erzeugung von Sensorlicht in einem nicht sichtbaren Spektrum ausgebildet ist.

10. Visualisierungsvorrichtung (10) nach einem der vorhergehenden Ansprüche, wobei der mindestens eine Sensor (22) als berührungsloser Distanzsensor zum Messen von Abstandswerten ausgebildet ist und wobei die Geometrie des Schutzfeldes (26) durch Vergleich der gemessenen Abstandswerte mit mindestens einer Abstandsschwelle festgelegt ist, wobei insbesondere die Steuer- und Auswertungseinheit (14) dafür ausgebildet ist, eine Abstandsschwelle darzustellen.

11. Visualisierungsvorrichtung (10) nach einem der vorhergehenden Ansprüche, wobei die Steuer- und Auswertungseinheit (14) dafür ausgebildet ist, den mindestens einen Sensor (22) darzustellen.

12. Visualisierungsvorrichtung (10) nach einem der vorhergehenden Ansprüche, wobei die Steuer- und Auswertungseinheit (14) dafür ausgebildet ist, Parameter, Betriebszustände, Messdaten und/oder Fehlermeldungen des Sensors (22) darzustellen.

13. Visualisierungsvorrichtung (10) nach einem der vorhergehenden Ansprüche, wobei die Steuer- und Auswertungseinheit (14) dafür ausgebildet ist, eine vergangene und/oder künftige Bewegungsbahn des beweglichen Maschinenteils darzustellen, insbesondere eine voraussichtliche Bewegungsbahn im Falle eines Schutzfeldeingriffs.

14. Visualisierungsvorrichtung (10) nach einem der vorhergehenden Ansprüche, wobei die Steuer- und Auswertungseinheit (14) dafür ausgebildet ist, einen Prüfpunkt, einen Umschaltpunkt, einen Arbeitspunkt und/oder eine Gefahrenstelle darzustellen, wobei an einem Umschaltpunkt ein Arbeitsvorgang beginnt oder endet, an einem Arbeitspunkt das bewegliche Maschinenteil mit einem Werkstück in Berührung kommt, an einem Prüfpunkt eine Funktionsprüfung des Sensors (22) erfolgt und eine Gefahrenstelle ein Ort oder Bereich ist, an dem Verletzungen drohen.

15. Verfahren zum Visualisieren eines Schutzfeldes (26) mindestens eines Sensors (22), der eine Maschine (18), insbesondere einen Roboter oder Roboterarm, durch Überwachung des Schutzfeldes (26) absichert, wobei eine graphische Repräsentation des Schutzfeldes (26) erzeugt und auf einer Anzeige (12) dargestellt wird,
**dadurch gekennzeichnet,**
**dass** der Sensor (22) mit einem beweglichen Maschinenteil der Maschine (18) mitbewegt wird, dass eine Pose des Sensors (22) bezüglich einer Beobachterperspektive der Visualisierung bestimmt wird und dass die graphische Repräsentation des Schutzfeldes (26) an die Pose angepasst wird.
